(19) Europäisches Patentamt
European Patent Office
Office européen des brevets

(11) **EP 0 929 168 B1**

(12) **EUROPEAN PATENT SPECIFICATION**

(45) Date of publication and mention of the grant of the patent:
**14.02.2007 Bulletin 2007/07**

(51) Int Cl.:
***H04L 7/033*** *(2006.01)*

(21) Application number: **98440298.2**

(22) Date of filing: **23.12.1998**

(54) **System and/or method for recognizing and tracking the sampling phase in digital synchronous transmission systems**

System und/oder Verfahren zur Erkennung und Nachführung der Abtastphase in einem digitalen synchronen Übertragungssystemen

Système et/ou méthode de détection et d'asservissement de la phase d'échantillonage dans des systèmes de transmission synchrone

(84) Designated Contracting States:
**DE ES FR GB**

(30) Priority: **07.01.1998 IT TO980007**

(43) Date of publication of application:
**14.07.1999 Bulletin 1999/28**

(73) Proprietor: **STMicroelectronics N.V.**
**1215 Geneve 15 (CH)**

(72) Inventors:
• **Carbone, Stefano**
**20159 Milano (IT)**

• **Canavese, Angelo**
**20161 Milano (IT)**

(74) Representative: **Maccalli, Marco et al**
**Maccalli & Pezzoli S.r.l.,**
**Via Settembrini, 40**
**20124 Milano (IT)**

(56) References cited:
**US-A- 4 780 889      US-A- 5 022 057**
**US-A- 5 046 075**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a system and/or method for recognizing and tracking the sampling phase of a signal received in a local terminal, in digital synchronous transmission systems.

Digital communication systems are often faced with the condition of a local oscillator generating the frequency to transmit data to a remote receiving terminal which, by extracting clock information from the data themselves, e.g. through a Phase Locked Circuit, PLL, uses such a frequency both for reading the data received and timing its own operations.

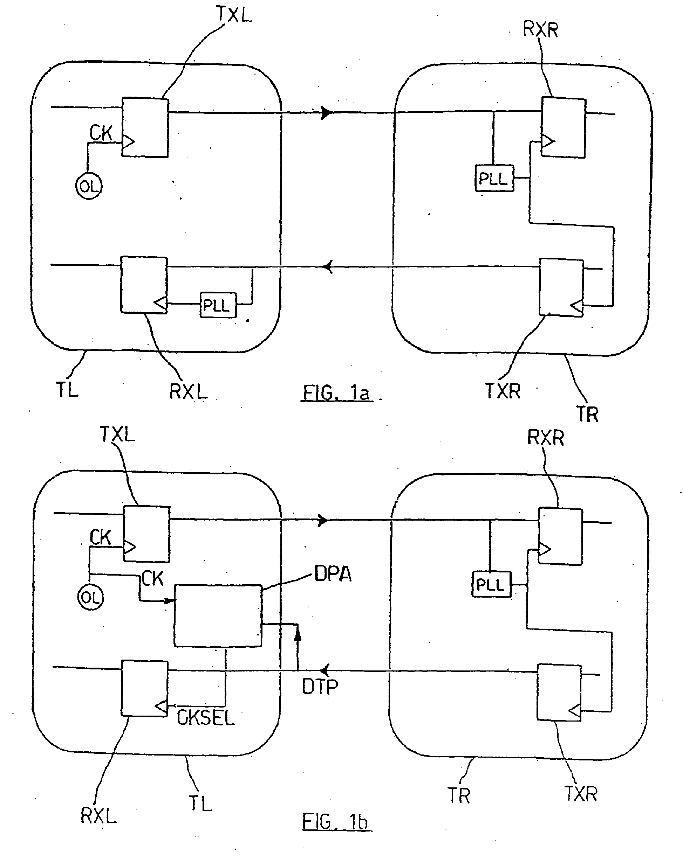

In Fig. 1a a general schematics of a communication system as above is shown by way of example, where a main local terminal TL arranged with a local clock OL is provided. Said local clock OL provides for timing, i.e. a transmission clock signal CK, to a transmitter circuit TXL contained in the main local terminal TL. The latter communicates with a remote terminal TR having a phase locked circuit PLL at its input, which can be synchronized with the clock frequency of the signal from the transmitter TXL according to the local clock OL. Said phase locked circuit PLL will then supply the clock signal locked to the local clock frequency OL to both a receiver RXR and a transmitter TXR, both included in the remote terminal TR. Thus, the receiver RXR is able to decode the transmitted signal according to the local clock frequency OL. On its turn, the transmitter TXR is able to communicate with a receiver RXL located on the main local terminal TL at the same clock frequency. The receiver RXL is also provided on its turn with a further phase locked circuit PLL which is able to synchronize it with the signal from the transmitter TXR. In simpler arrangements, the receiver RXL receives the signal directly from the local clock OL and is timed by it on the signal from the transmitter TXR.

Therefore, clock information in a communication system as described in Fig.1a is not transmitted explicitly, i.e. as a coded information data but is substantially obtained from the data transmitted through a PLL circuit.

The receiver contained in the local terminal should also be able to carry out a correct sampling of the data transmitted from the remote terminal. Since the clock frequency is the same for both the local terminal and the remote terminal, as previously mentioned, the only problem is to recognize the phase of the signal which has been re-transmitted from the remote terminal and to be able to, possibly, follow its changes.

A possible solution is to also provide the local terminal receiver with a further PLL circuit for automatic locking to the clock frequency of the signal re-transmitted from the remote terminal.

However, said solution has some drawbacks due to its complex implementation. Further, it can not be easily integrated in digital circuits.

Moreover, the use of PLL circuits will generally introduce a "jitter", i.e. a frequency distortion, resulting in phase shifts.

Finally, it should be noted that a low frequency "jitter", also called "wander" is also generated in the clock signal by the small changes of the operating point of the various circuits, due to temperature changes, power supply value and aging.

US 5,022,057 discloses an embodiment of bit synchronization circuit as per the preambule of independent claim 1.

It is the object of this invention to solve the above mentioned drawbacks and provide a system and/or method for recognizing and tracking the sampling phase of a signal received in a local terminal, in digital synchronous transmission systems, which is improved in implementation and more efficient compared to the known solutions.

Under this frame, it is the main object of this invention to provide a system and/or method for recognizing and tracking the sampling phase of a signal received in a local terminal, in digital synchronous transmission systems, which allows for following the phase shifts due to both low and high frequency "jitters" and, in general, to interferences.

Another object of this invention is to provide a system and/or method for recognizing and tracking the sampling phase of a signal received in a local terminal, in digital synchronous transmission systems, which can be easily implemented and integrated in digital circuits.

In order to reach such purposes, the present invention provides a system and/or method for recognizing and tracking the sampling phase of a signal received in a local terminal, in digital synchronous transmission systems, incorporating the features contained in the annexed claims.

Other objects, features and advantages of this invention will become apparent from the following detailed description and annexed drawings, which are only provided by way of a non limiting example, wherein:

- Fig. 1a shows a general schematics of a communication system according to the known state of the art;
- Fig. 1b shows a general schematics of a communication system incorporating the system for recognizing and tracking the sampling phase of a signal received in a local terminal from a remote terminal, in digital synchronous transmission systems according to the invention;
- Fig. 2 shows a time diagram of the clock signals of the system for recognizing and tracking the sampling phase of a signal received in a local terminal from a remote terminal, in digital synchronous transmission systems according to the invention;

- Fig. 3a shows a general schematics of an embodiment of a system for recognizing and tracking the sampling phase of a signal received in a local terminal from a remote terminal, in digital synchronous transmission systems according to the invention;
- Fig. 3b shows implementative diagrams of special circuits of the system for recognizing and tracking the sampling phase of a signal received in a local terminal from a remote terminal, in digital synchronous transmission systems according to Fig. 3a;
- Fig. 4a shows a summarizing table of decision rules adopted by the system for recognizing and tracking the sampling phase of a signal received in a local terminal from a remote terminal, in digital synchronous transmission systems according to Fig. 3a;
- Fig. 4b shows an operating diagram of the finite state machine actuating the decision rules represented in Fig. 4a;
- Fig. 5 shows a further detail of the system for recognizing and tracking the sampling phase of a signal received in a local terminal from a remote terminal, in digital synchronous transmission systems represented in Fig. 3a;
- Fig. 6 shows a modification to the detail of Fig. 5 of the system for recognizing and tracking the sampling phase of a signal received in a local terminal from a remote terminal, in digital synchronous transmission systems according to Fig. 3a.

In Fig. 1b a communication system similar to that represented in Fig. 1a is shown, the only difference being in its local terminal TL1 based on a different concept, whereas the remote terminal TR remains the same as represented in Fig. 1 a. Said local terminal TL1 contains the transmitter TXL, as well as the local clock OL and the receiver RXL. However, a phase alignment or phase tracking circuit DPA is also provided. Said phase alignment circuit DPA will receive at its input the transmission clock signal CK of the local clock OL and output a selected clock signal CKSEL to the receiver RXL as its clock signal. Said phase alignment circuit DPA also receives the entering data flow DTP from the transmitter TXR. As it will be clear from the following description, the selected clock signal CKSEL is a clock signal following the phase shifts of the entering data flow DTP thus allowing the receiver RXL to make a minimum error about the sampling phase.

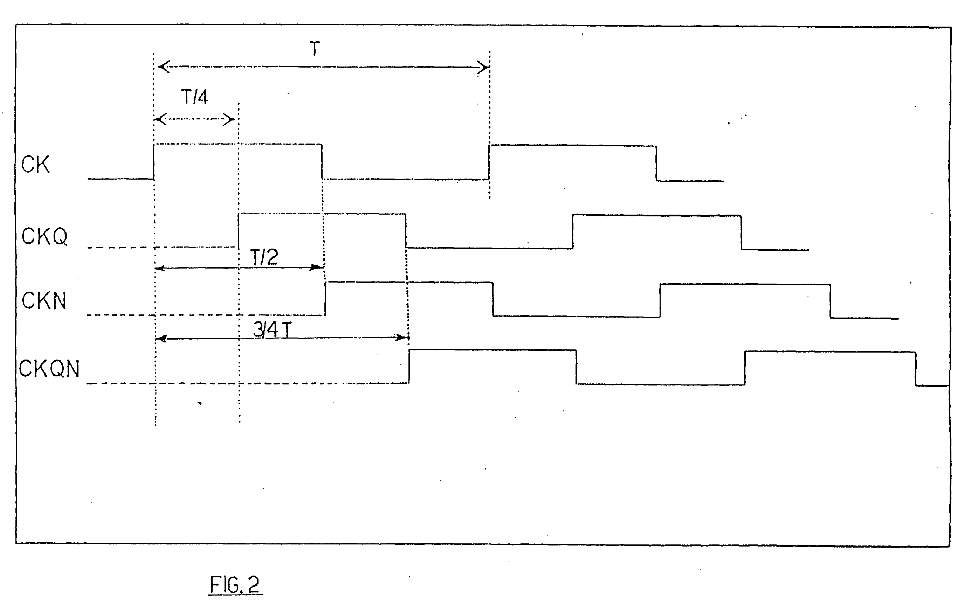

In Fig. 2 the diagrams of four isofrequential clock signals are shown, which are required for implementing the system according to this invention.

Therefore a transmission clock signal CK, which is the local clock signal OL, an quadrature clock signal CKQ, i.e. having a quarter-period phase difference with respect to the transmission clock signal CK, are shown. A complentary clock signal CKN corresponds to the complentary transmission clock signal CK i.e. with a half-cycle phase difference, and also a complentary clock signal CKQ is provided as well.

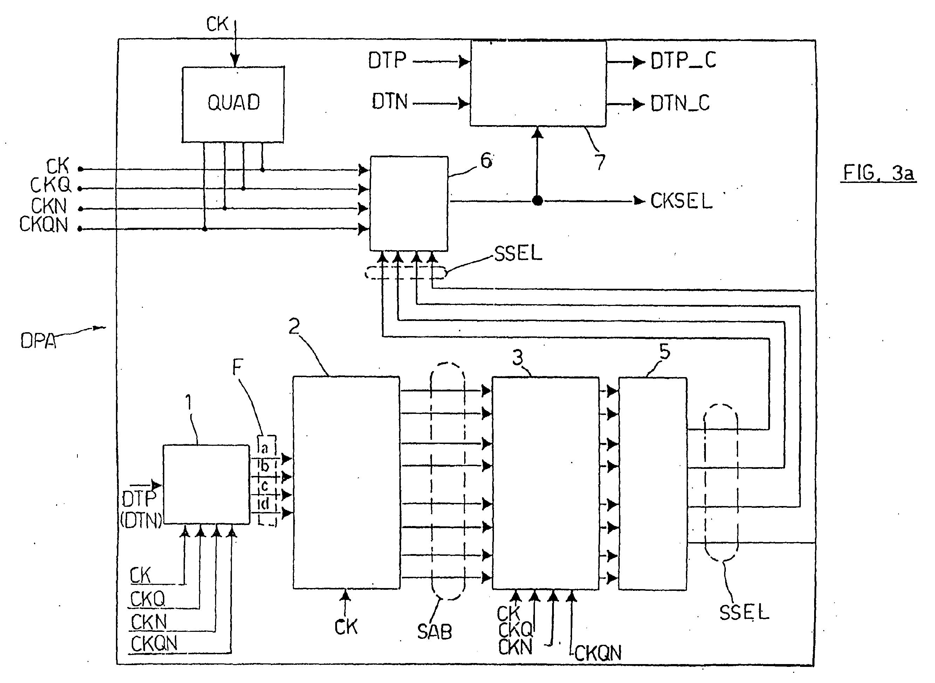

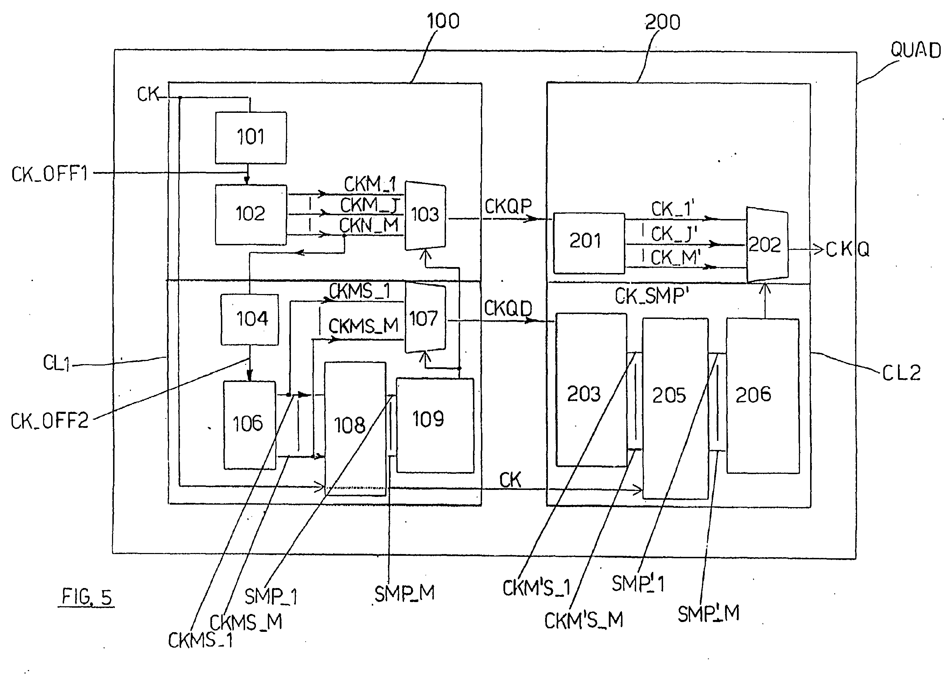

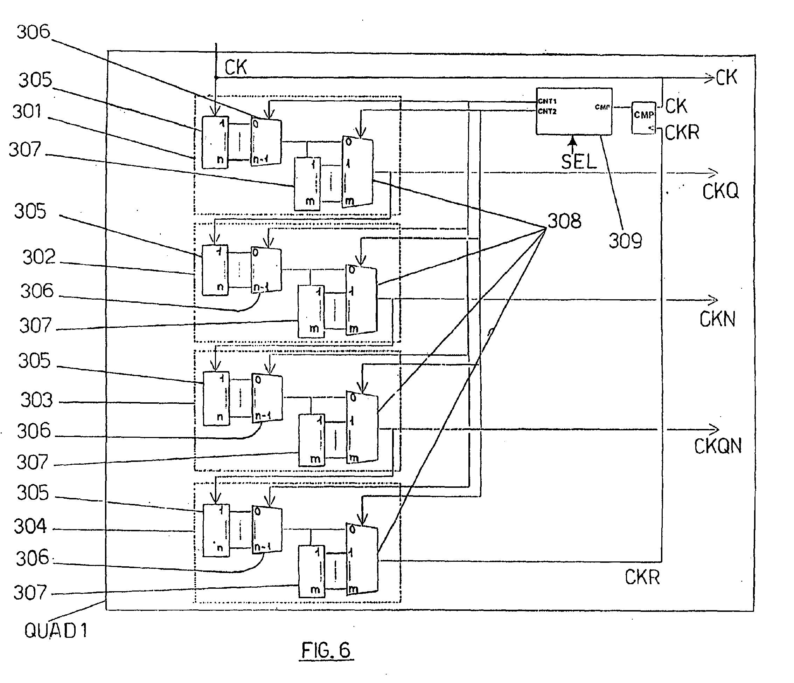

The quadrature clock signal CKQ is obtained by means of digital techniques better explained hereinbelow by way of example in Fig. 3a and particularly with reference to Figs. 5 and 6. It can be also easily obtained through a quarter period delay line.

In Fig. 3a the phase alignment circuit DPA according to the invention is represented.

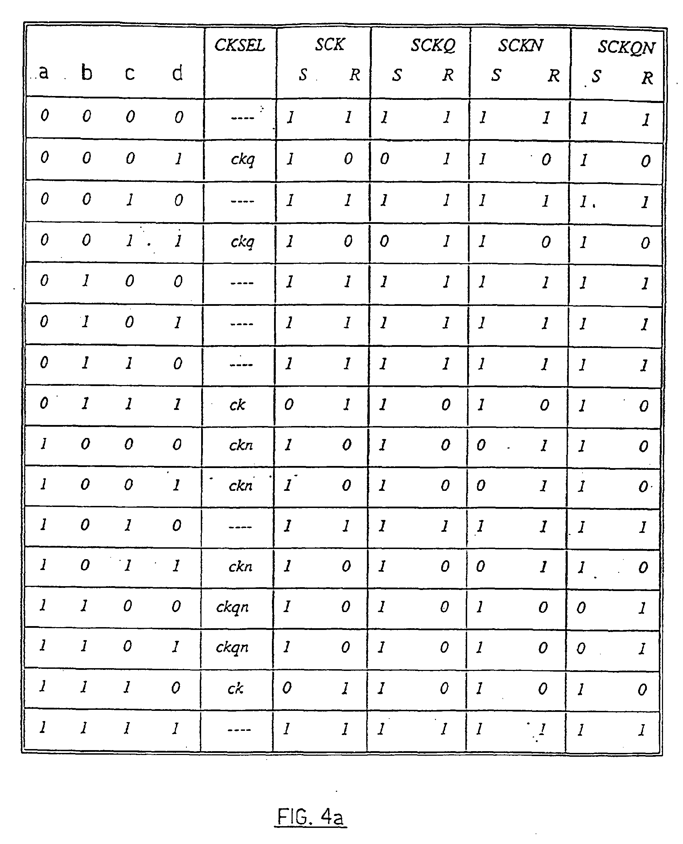

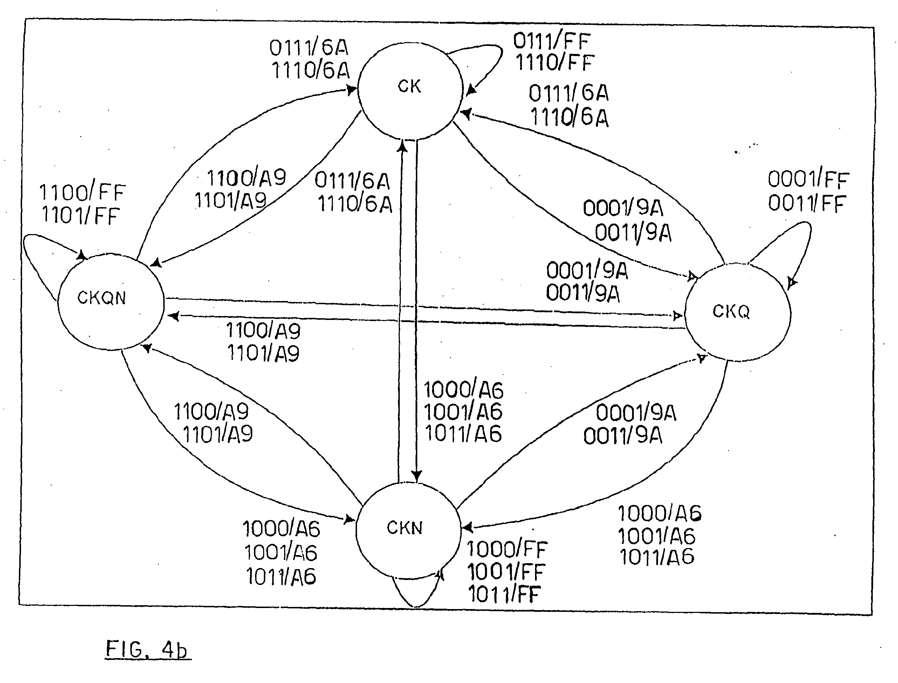

An input data DTP flow, entering through a phase and sampling detector 1; said phase and sampling detector 1 receives at its input the four clock signals CK, CKQ, CKN, CKQN. The four clock signals CK, CKQ, CKN, CKQN are obtained through a quadrature signal generator circuit QUAD, which obtains them starting from the transmission clock signal CK of the local clock OL received at its input. The four clock signals CK, CKQ, CKN, CKQN are also brought to four alignment circuit DPA terminals to be supplied to other points of said alignment circuit DPA, such as the inputs of the phase and sampling detector 1 and other circuits to be described later. The phase and sampling detector 1 outputs a 4-bit (a, b, c, d) phase information F, obtained by the input data flow DTP. Said phase information F enters a selection logic 2. Said selection logic 2 consists of a finite state machine, whose operation is represented in Fig. 4b, which is timed by the transmission clock signal CK and manages the use of all four clock signals CK, CKQ, CKN, CKQN through a group of enable signals SAB. A sampling and phase re-timing circuit 3 receives enable signals SAB and transmits them to a latch block 5, i.e. a transit memory circuit block, wherein four selection signals SSEL of clock signals CK, CKQ, CKN, CKQN are produced. Said four selection signals SSEL are sent to a multiplexer circuit 6, which receives at its input the four clock signals CK, CKQ, CKN, CKQN. The selected clock signal CKSEL chosen among the four clock signals CK, CKQ, CKN, CKQN is then output from the multiplexer circuit 6. Finally, it is provided a period stretching and sampling circuit 7, which receives at its input the input data flow DTP and a complentary input data flow DTN, which is complementary with respect to the input data flow DTP, and will output a flow of sampled data DTPC and its complentary flow DTNC. Said period stretching and sampling circuit 7 is substantially a latch performing the following operation on a bit of the input data flow DTP or of the complentary input data flow DTN: it extends the cycle till a new edge of the selected clock signal CKSEL occurs.

Circuit operation can be summarized as follows.

The input data flow DTP reaches the phase and sampling detector input 1, where its unknown phase is compared to each one of the four clock signals CK, CKQ, CKN, CKQN. In this instance, sampling of the input data flow DTP is performed in accordance with the transmission clock signal CK.

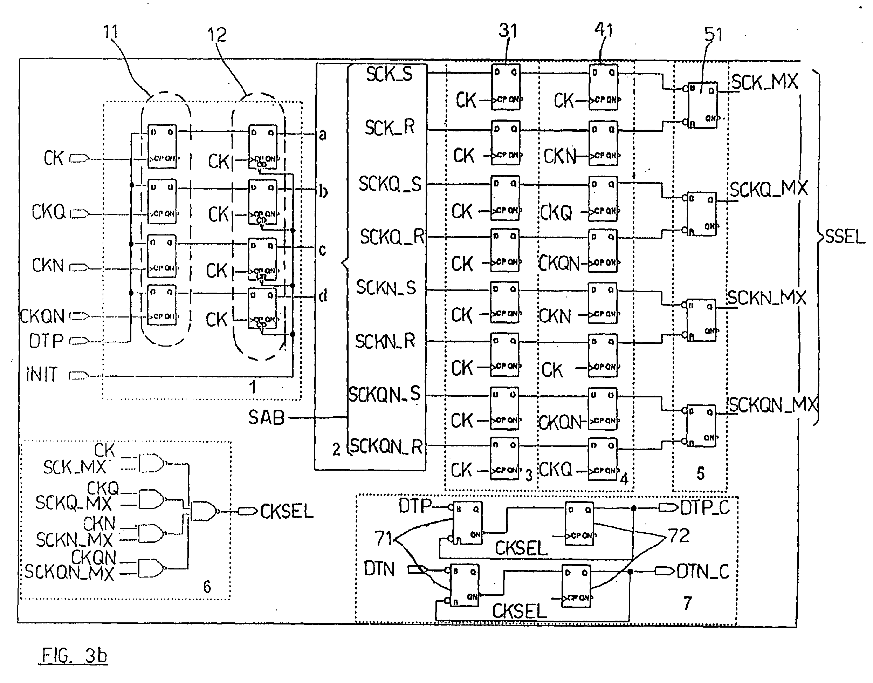

The operation will result in a four-bit signal a, b, c, d, the phase information F which will be interpreted by the selection logic 2. Thus, selection logic output 2 consists of enable signals SAB, which will be described better in Fig. 3b, first going through the sampling and phase re-timing circuit 3 which carries out their sampling according to the transmission clock signal CK. The purpose of said sampling is to have a full clock signal period for the settling of the combinatory logic of selection logic 2, which is useful specifically in high frequency applications.

The latch block 5 is used to store the selection status provided by signals SSEL and reach a condition where switching is only permitted between adjacent clock signals. This condition is imposed to let the subsequent multiplexer circuit 6 change the selected clock signal CKSEL without possibly generating any false edges, which could obviously lead to malfunctions. As a matter of fact, if switching occurs between adjacent clock signals and if enable/disable switching of a selected clock signal CKSEL is performed using the raising edge and the lowering edge, respectively, of the clock signal itself, then this could possibly lead to false edges generation.

Thus, the multiplexer circuit 6 outputs the selected clock signal CKSEL, which is then used to sample the input data flow DTP introducing a tolerance in the sampling phase through the period stretching and sampling circuit 7, so as to consider the uncertainty of the phase detecting and sampling circuit 1 in detecting the phase F of the input data flow DTP. The flow of sampled data DTPC and the complentary flow of sampled data DTPN are then transmitted to a processing logic not shown here, but obviously available in every communication system as for the type represented in Fig. 1b. Also the selected clock signal CKSEL is supplied to said processing logic.

In Fig. 3b some embodiments of components of the phase alignment circuit represented in Fig. 3a are shown. As it can be seen here, the phase detecting and sampling circuit 1 consists of a first group of four flip-flop circuits 11, receiving on their data input the input data flow DTP and at each clock input one of the four clock signals CK, CKQ, CKN, CKQN, so as to perform phase detection. Sampling is performed by a second group of four flip-flop circuits 12 clocked according to the transmission clock signal CK. The selection logic 2 outputs eight enable signals SAB, SCK_S, SCK_R, SCKQ_S, SCKQ_R, SCKN_S, SCKN_R, SCKQN_S, SCKQN_R, which are enable and disable signal pairs, respectively. Decision rules actuated by the selection logic 2 are represented in Figs. 4a and 4b. The sampling and phase re-timing circuit 3 consists of a first group of 8 flip-flops 31, which performs sampling according to the timing of the transmission clock signal CK and a second group of 8 flip-flops 41, which performs the phase retiming according to the relevant clock signals CK, CKQ, CKN, CKQN. Through flip-flops 31 and flip-flops 41 the enable signals SAB will reach the latch block 5 obtained through the four set/reset flip-flops 51, where four signals SCK_MX, SCKQ_MX, SCKN_MX, SCKQN_MX, i.e. the selection signals SSEL for the multiplexer circuit 6, are enable and disable signals for their outputs. It can be seen that, in the flip-flops 41, the same clock signal CK is used to enable SCK_S for the same enable signal, e.g. SCK, whereas to disable SCK_R the complentary clock signal CKN is used, which means using the raising edge for one and the descending edge for the other one.

Moreover, Fig. 3b shows implementation of the multiplexer 6 through NAND gates to input select a selected clock signal CKSEL out of the four clock signals CK, CKQ, CKN, CKQN.

Fig. 3b also shows implementation of the period stretching and sampling circuit 7, consisting of two set/reset flip-flops 71, for the input data flow DTP and complentary input data flow DTN, whose outputs are sampled through further flip-flops 72, which operate according to the selected clock signal CKSEL. The sampled data flow DTPC and complentary sampled data flow DTPN are also used to return the period stretching and sampling circuit 7 to its initial conditions through the set/reset flip-flops 71.

In Fig. 4a the decision rules actuated by the selection logic 2 are shown. In the first column the values that can be assumed by the four clock signals CK, CKQ, CKN, CKQN, are indicated, i.e. corresponding substantially to the phase information of the 4-bit data F, a, b, c, d. The selected clock signal CKSEL is indicated accordingly. The remaining columns report the enable signals SAB accordingly produced. Fig. 4b shows the operating diagram of the finite state machine contained in the selection logic 2 and corresponding to the decision rules illustrated in the Table of Fig. 4a. Inputs due to the phase information of the 4-bit phase data F, a, b, c, d and the hexadecimal coded outputs representing the 8 binary values of the enable signals SAB are also represented. Referring to the Table of Fig. 4a, for instance, 0111/6A corresponds to a phase information F measuring the input clock signal CK (0111) and the hexadecimal code 6A output corresponds to the binary string 01101010, i.e. the logic values to be sent as set/reset signals to the 8 flip-flops 31.

Fig. 5 shows the quadrature signal generating circuit QUAD able to generate the quadrature clock signal CKQ. As already mentioned, delay lines may be effectively used to this purpose, however they have the drawback of a rather big size as well as a bad integration with digital technologies, whose application represents one of the objects of this invention. The quadrature signal generating circuit QUAD is fully obtained through digital technologies, specifically CMOS technology, which also avoids the drawbacks that hindered the use of digital circuits to generate delays, or dispersion effects in the technological parameters due to the device manufacturing process, or the effect of environmental parameters changes, such as temperature and supply. Such drawbacks are mainly overcome by the use of a group of delay cells introducing delay times with a different value to each other and much shorter than the period time of the reference clock signal. A careful selection strategy of said delay times will result in a quadrature clock signal.

The quadrature signal generating circuit QUAD is in fact divided in two stages: a first stage 100 and a second stage 200. The first stage 100 is composed of a first offset delay block 101, which receives at its input the transmission clock signal CK from the local clock OL, and transfers a first offset clock signal CKOFF1 to a first delay block 102. The first offset clock signal CKOFF1 is a delayed signal, which is so short with respect to the transmission clock signal CK, that no quadrature clock signal with respect to the transmission clock signal CK can be derived from said first offset clock signal CKOFF1.

The first delay block 102 is provided with m outputs, at which clock signals CKM_1 ... CKM_M are produced. Clock signals CKM_1 ... CKM_M at m outputs are incrementally phase shifted to each other by a first delay TA. It should be noted that any mention to the first delay TA and second delay TB to be introduced later refers to the nominal values of said delays, without taking into account any changes due to a dispersion of the technological parameters and environmental effects.

A first multiplexing circuit 103 input receives m clock signals CKM_1 ... CKM_M.

The clock signal CKM_M with a greater phase shift equal to m times TA, is brought to the input of a first logic circuit CL1 consisting of a second offset delay block 104, at whose output a second offset clock signal CKOFF2 is generated. The offset time introduced by the second offset delay block 104 must be such to produce a second offset clock signal CKOFF2, which is delayed with respect to the transmission clock signal CK till the raising edge is around the descending edge of the main clock signal CK, but without the raising edge of the second offset clock signal CKOFF2 is prior to the descending edge of the main clock signal CK.

Therefore, the second offset clock signal CKOFF2 generated as above will enter a second delay block 106. The second delay block 106 operates similarly to the first delay block 102.

Therefore, said second delay block 106 isprovided with m outputs, where clock signals CKMS_1 ... CKMS2_M are produced. Clock signals CKMS_1 ... CKMS_M at m outputs are incrementally phase shifted to each other twice the amount of the first delay TA. A second multiplexing circuit 107 receives at its input the m clock signals CKMS_1 ... CKMS_M. Moreover, said clock signals CKMS_1 ... CKMS_M are inputted to a sampler circuit 108, which receives the main clock signal CK at one of its other inputs. The sampler circuit 108 samples clock signals CKMS_1 ... CKMS_M through the main clock signal CK. At the first sampler circuit 108 output, samples, which are logic '1' and '0', of the clock signals SMP_1 ... SMP_M will be available as a result of the descending edge position of the transmission clock signal CK with respect to said clock signals CKMS_1 ... CKMS_M. A first decision logic 109 receives samples SMP_1 ... SMP_M from the first sampler circuit 108 and selects an approximate quadrature clock signal CKQP among the clock signals CKM_1 ... CKM_M on the first multiplexing circuit 103.

The selection rule used by the first decision logic 109 is as follows: if samples SMP_1 ... SMP_M from the first to a determined sample SMP_J, whose index j is included between 1 and m, assume the value of logic "1", and the following ones up to the sample SMP_M assume the value of logic '0', the first decision logic 109 will correspondingly select through the first multiplexing circuit 103 the clock signal CKM_J as an approximate quadrature clock signal CKQP. The decision logic 109 also controls the second multiplexing circuit 107, which input receives clock signals CKMS_1 ... CKMS_M to select a delayed quadrature clock signal CKQD among said clock signals CKMS_1 ... CKMS_M, which clock signals, as already said before, are spaced twice the first delay time TA. Since the decision logic 109 is the same controlling the multiplexing circuit 103, the clock signal CKMS_J is chosen as a quadrature delayed clock signal CKQD, corresponding to the transmission clock signal CK, which is delayed twice j x TA. Thus, the delayed quadrature clock signal CKQD has its own raising edge around the descending edge of the clock signal CK.

As a result, three output clock signals are available from the first stage 100, i.e. the approximate quadrature clock signal CKQP, the delayed quadrature clock signal CKQD and the transmission clock signal CK. The approximate quadrature clock signal CKQP is a clock signal approximating the quadrature with respect to the transmission clock signal CK to the extent this is allowed by the value represented by the first delay TA, i.e. in the worst case the quadrature is reached with a maximum deviation equal to the first delay TA. The delayed quadrature clock signal CKQD is a clock signal that may be defined in phase quadrature with respect to the transmission clock signal CK to the extent this is allowed by the double of the time value first delay TA, i.e. in the worst case the quadrature is reached with a maximum deviation equal to twice the first delay TA.

The approximate quadrature clock signal CKQP input enters the second stage 200, and more precisely, a third delay block 201.

Also the third delay block 201 has m' outputs, where clock signals CKM'_1 ... CKM'_M' are generated. Clock signals CKM'_1 ... CKM'_M' at m outputs are incrementally phase shifted to each other by a second delay TB. A third multiplexing circuit 202 input receives m clock signals CKM'_1 ... CKM'_M' generated to select the quadrature clock signal CKQ.

The delayed quadrature clock signal CKQD, on the contrary, input enters a fourth delay block 203.

Said fourth delay block 203 also has m' outputs where clock signals CKM'S_1 ... CKM'S_M' are generated. Clock signals CKM'S_1 ... CKM'S_M' at m outputs are incrementally phase shifted to each other by a time amount equal to twice the second delay TB so that, as described for the stage 100, a second sampler circuit 205 operating like the first sampler circuit 108 will supply to a second decision logic 206 the information to choose as clock signal samples SMP'_1' ... SMP'_M' between the clock signals CKM'_1 ... CKM'_M', through actuation of the third multiplexer circuit 202, the quadrature clock signal CKQ being the output of the quadrature signal generating circuit QUAD.

It can be easily understood that the quadrature clock signal CKQD performs, also for stage 200, the task previously accomplished by the clock signal CK_OFF2 for stage 100, i.e. provides a time reference with the raising edge around the descending edge of the main clock signal CK.

Therefore, operation of the quadrature signal generating circuit QUAD is quite evident:

- during the first stage 100, m clock signals CKM_1 ... CKM_M are generated by the transmission clock signal CK through the delay block 102, which are incrementally phase shifted to each other by the first delay time TA. In the assumption, for instance, of a main clock signal with a period T of 19,59 ns (51,84 MHz frequency), the first delay time TA can be chosen equal to 1 ns and the number m of outputs of the first delay block 102 is equal to 9. Thus the clock signal CKM_1 will have a 2 ns delay with respect to the transmission clock signal CK and a clock signal CKM_M delayed by 10 ns with respect to the main clock signal CK. It should be remembered that quadrature clock signal CKQ should ideally have a delay time of T/4, i.e. about 4,82 ns, so it is easy to determine that the clock signal CKM_3 will be the one to approximate said delay value by defect using the first delay time TA as a step. Said determination is made in fact through the logic circuit CL1.

- the logic circuit CL1 generates first of all a clock signal CK_OFF2, which is substantially delayed by T/2 with respect to the main clock signal CK. This is required for a correct operation of the first decision logic 109, as it is described. Secondly, the logic circuit CL1 generates clock signals CKMS_1 ... CKMS_M which are phase shifted to each other by the double of the first delay time TA, so that sampling activity of the sampler circuit 108 may cover the whole time period T and detect the position of the descending edge of the main clock signal CK. Thus, it is possible to drive the choice of the first multiplexing circuit 103. Further, the delayed quadrature clock signal CKQD is obtained through the logic circuit CL1, whose function is to serve as a new reference for the second stage 200.

  Thus, the logic circuit CL1 performs the primary function to select the approximate quadrature clock signal CKQP with the precision of the first delay time TA, and further the auxiliary function of providing the second stage 200 with the corresponding delayed quadrature clock signal CKQD, so that the structure does not need to be repeated to correctly drive the second sampler circuit 205. The logic circuit CL1 structured as above is necessary since due to a dispersion of technological parameters in digital circuits, the first delay time TA introduced by the various delay cells contained in the first delay block 102 has a different value and may also lead to 100% residual errors between the first delay time TA added e.g. to the signal CKM_1 and the first delay time TA added to the signal CKM_2. The circuit CL1 uses substantially the clock signal CKM_M as a reference to generate clock signals CKMS_1 ... CKMS_ M being sampled with the known clock signal CK, so as to compensate the dispersion effect of technological parameters on the first delay time TA and correctly drive the first multiplexing circuit 103.

- The second stage 200 operates like the first stage 100. Since the second delay time TB is by far lower than the first delay time TA, e.g. it is 0,2 ns, detection of the descending edge of the transmission clock signal CK is finer, with the result of an approximate quadrature clock signal CKQ having the precision of the second delay time TB, i.e. 0,2 ns. Since the second delay time TB is much shorter than the first delay time TA, in this instance the logic circuit CL2 will not take the signal CK_M' as a reference, in view of the fact that here a likely error due to dispersion of technological parameters is less sensed. It is enough to use the delayed quadrature clock signal CKQD as a reference.

  A main advantage of the signal quadrature generating circuit QUAD described above is its capability to follow period changes and phase deviations of the main clock signal CK, i.e. deviations by 50% from an ideal 'duty period'. Moreover, it will also compensate dispersion effects in technological parameters due to the manufacturing process of the devices in use and varying environmental parameters, such as temperature and supply. Said drawback represented in fact the main restriction to the use of delay cells based on digital circuits against conventional delay lines. Moreover, the circuit described above is fully obtainable under CMOS technology, i.e. it is fully compatible with the phase alignment circuit DPA previously described. It is quite obvious, in the instance of a QUAD circuit, that clock signals CKN and CKQN not shown here are obtained inverting clock signals CK and CKQ according to standard logic signals inversion techniques.

  Fig. 6 shows a quadrature signal generating circuit QUAD1, i.e. a change to the quadrature signal generating circuit QUAD. It consists of four stages 301, 302, 303, 304 featuring an identical structure, i.e. a delay block 305 with n outputs connected with n inputs of a multiplexer circuit 306. The output of multiplexer circuit 306 is connected with a delay block 307 having m outputs, the latter being connected with m inputs of a multiplexer circuit 308. The delay block 305 assigns the first delay time TA while the delay block 307 the second delay time TB, in the same manner as described with reference to Fig. 5.

  Stages 301, 302, 303 and 304 are connected in cascade, i.e. each stage will receive the output signal, i.e. the multiplexer circuit output 308 of the preceding stage, at its input, i.e. at the input of the delay block 305. The only exception being of the first stage 301 that will input receives the main clock signal CK.

The multiplexer circuit 306 is driven by a counter CNT1 generated by a selection block 309. A counter CNT2 driving the multiplexer circuit 308 is generated by said selection block 309.

The input of selection block 309 is a comparator output CMP, which samples the transmission clock signal CK with a second reference clock signal CKR produced on the fourth stage output 304.

Moreover, the selection block 309 has an input SEL, which is able to reset counters CNT1 and CNT2.

The selection block 309 operates as follows:

1) upon receipt of the reset control at input SEL, it will reset the counter CNT1, which is able to count in a range from 0 to n-1, and counter CNT2, which is able to count in a range from 0 to m.

- the reset counters CNT1 and CNT2 determine the following outputs from stages 301, 302, 303, 304:

$$CKQ = CK \text{ delayed by } 1 \times Ta$$

$$CKN = CKQ \text{ delayed by } 1 \times Ta$$

$$CKQN = CKN \text{ delayed by } 1 \times Ta$$

$$CKR = CKQN \text{ delayed by } 1 \times Ta$$

2) the selection block 309 waits for some periods of the main clock signal CK, to let the circuit QUAD1 settle and update the output value from the comparator CMP;

3) if the output value from the updated comparator CMP is 1, the value of counters CNT1 will be maintained. As a matter of fact, this is determined if the reference clock signal CKR is phase shifted by a full period with respect to the main clock signal CK. Otherwise the counter CNT2 will be incremented by 1, maintaining the counter CNT1 on zero. Outputs from stages 301, 302, 303, 304 are determined as follows:

$$CKQ = CK \text{ delayed by } 1 \times TA + 1 \times TB$$

$$CKN = CKQ \text{ delayed by } 1 \times TA + 1 \times TB$$

$$CKQN = CKN \text{ delayed by } 1 \times TA + 1x \text{ } TB.$$

$$CKR = CKQN \text{ delayed by } 1 \times TA + 1x \text{ } TB.$$

4) Steps 2) and 3) are repeated for a number k of times, obtaining the following outputs from stages 301, 302, 303, 304:

$$CKQ = CK \text{ delayed by } 1 \times TA + k \times TB$$

$$CKN = CKQ \text{ delayed by } 1 \times TA + k \times TB$$

$$CKQN = CKN \text{ delayed by } 1 \times TA + k \times TB$$

$$CKR = CKQN \text{ delayed by } 1 \times TA + 1 \times TB.$$

till the comparator CMP switches at a number k less than or equal to m. If no switching of the comparator CMP is obtained for k = m, the counter CNT1 is incremented by 1 and the counter CNT2 become reset, thus obtaining the following outputs from stages 301, 302, 303, 304:

$$CKQ = CK \text{ delayed by } 2 \times TA$$

$$CKN = CKQ \text{ delayed by } 2 \times TA$$

$$CKQN = CKN \text{ delayed by } 2 \times TA$$

$$CKR = CKQN \text{ delayed by } 2 \times TA$$

5) Steps 2), 3) and 4) are repeated for a number h of times obtaining the following outputs from stages 301, 302, 303, 304:

$$CKQ = CK \text{ delayed by } h \times TA + k \times TB$$

$$CKN = CKQ \text{ delayed by } h \times TA + k \times TB$$

$$CKQN = CKN \text{ delayed by } h \times TA + k \times TB.$$

$$CKR = CKQN \text{ delayed by } h \times TA + k \times TB.$$

till a number h less than or equal to n-1 and a number k, less than or equal to m are obtained, so that the output of the comparator CMP will switch to logic '1', i.e. signals CK and CKR are in phase.

The maximum delay obtainable is on the outputs from stages 301, 302, 303, 304:

$$CKQ = CK \text{ delayed by } n\text{-}1 \times TA + m \times TB$$

$$CKN = CKQ \text{ delayed by } n\text{-}1 \times TA + m \times TB$$

$$CKQN = CKN \text{ delayed by } n\text{-}1 \times TA + m \times TB.$$

$$CKR = CKQN \text{ delayed by } n-1 \times TA + m \times TB.$$

In the instance of the circuit QUAD1 the first delay time TA and the minimum number n have to be chosen as to comply with the following relation in spite of variable technological and environmental conditions:

$$n \times TA \geq T/4$$

and the second delay time TB and minimum number m has to be chosen as to comply with the following relation in spite of variable technological and environmental conditions:

$$m \times TB \geq TA$$

The circuit QUAD1 optimizes the position of the four clock signals CK, CKQ, CKN, CKQN as to have a rated distance of a quarter-period from a raising edge to the following one.

The features of this invention as well as its advantages are quite clear from the above description.

The system and/or method for recognizing and tracking the sampling phase of a signal received in a local terminal, in digital synchronous transmission systems according to this invention, allows for correct sampling of the data transmitted from a remote terminal wherein the clock frequency is synchronized with the local oscillator and to adapt itself with time to the effects caused by either an high or lower frequency "jitter", or other interferences, since it is capable of selecting one of the various phases available to the local terminal, i.e. specifically one of the four clock signals in phase quadrature to each other.

This is effectively obtained by fully digital circuits, requiring a simple integration work and ensuring cost saving.

A further advantage of the system and/or method for recognizing and tracking the sampling phase of a signal received in a local terminal, in digital synchronous transmission systems according to this invention, is that there is no need to introduce extremely precise delays for the signals; on the contrary, the correct operation is based on the switching between adjacent clock signals, with said switching being driven by the clock signal edges involved with switching itself.

It is obvious that many changes are possible for the man skilled in the art to the system and/or method for recognizing and tracking the sampling phase of a signal received in a local terminal, in digital synchronous transmission systems as described by way of example, without departing from the novelty principles of the innovative solution, and it is also clear that in practical implementation of the invention the components may often differ in form and size from the ones described and be replaced with technical equivalent elements.

For instance, it is clear that this invention also covers the use and generation of phase shifted clock signals, which are not shifted by a quarter-period but other phase amounts, such as an eigth-period, to obtain an increased phase detection resolution.

**Claims**

1. A local terminal of a digital synchronous transmission system, the local terminal being adapted to receive a signal from a remote terminal of the digital synchronous transmission system, the local terminal being associated with a local clock signal (CK) also used to synchronize the remote terminal, the local terminal comprising a system for recognizing and tracking the sampling phase (DPA) of the signal received from the remote terminal, said system for recognizing and tracking the sampling phase (DPA) comprising means (QUAD; QUAD1) able to derive from said local clock signal (CK) a plurality of isofrequential clock signals (CK, CKQ, CKN, CKQN) with determined phase differences to each other, means (1, 2, 3, 5, 6) able to select, among the plurality of clock signals having determined phase differences to each other (CK, CKQ, CKN, CKQN), a sampling clock signal (CKSEL) of the signal received (DTP), said sampling clock signal having a phase substantially coinciding with the phase of the signal received (DTP), said means (1, 2, 3, 5, 6) able to select a sampling clock signal (CKSEL) of the signal received (DTP) comprising means (1) for detecting the phase of the received signal (DTP) with respect to the clock signals (CK, CKQ, CKN, CKQN), said means (1) for detecting the phase being configured to compare the phase of the received signal (DTP) to each of said plurality of isofrequential clock signals (CK, CKQ, CKN, CKQN), logic means (2, 3, 4, 5) to generate selection signals (SSEL) based on the result of the phase detecting means (1), a multiplexer circuit (6) able to select the sampling clock signal (CKSEL) as a function of a selection status defined by the selection signals (SSEL),

**characterized in that**
the logic means comprise a memory circuit block (5) for storing said selection signals and for permitting the multiplexer circuit to change the selected sampling clock signal only between said clock signals (CK, CKQ,CKN, CKQN) adjacent one to another in terms of phase.

2. The local terminal according to claim 1, **characterized in that** said means (QUAD; QUAD1) to derive from said local clock signal (CK) a plurality of clock signals (CK, CKQ, CKN, CKQN) with determined phase differences to each other produce different clock signals which are phase shifted to each other, specifically phase shifted in quadrature to each other.

3. The local terminal according to claim 1 or 2, **characterized in that** the phase detection means (1) transmit to the logic means (2, 3) a binary information (a, b, c, d) about the phase value of the signal received (DTP).

4. The local terminal according to claim 3, **characterized in that** the logic means (2, 3) consist of a selection logic (2) providing selection signals (SAB) to a phase re-timing circuit (3), whose output signals are driving the intermediate memory circuit block (5) providing the selection signals (SSEL).

5. The local terminal according to claim 3 or 4,
   **characterized in that** the phase re-timing circuit (3) has at its output a plurality, particularly eight, of flip-flops (41) which receive at the clock input the clock signals (CK, CKQ,CKN, CKQN) which are phase shifted to each other and supply enable or disable signals, the memory circuit block (5) being formed by a plurality of flip-flops (51), particularly four set-reset flip-flops, which, at their set input receive an enable signal and at their reset input a disable signal, and **in that** the flip-flop (41) supplying the enable signal for one clock signal among the plurality of clock signals (CK, CKQ,CKN, CKQN) phase shifted to each other receives at clock input the corresponding signal among the clock signals (CK, CKQ,CKN, CKQN) phase shifted to each other, whereas the flip-flop (41) supplying the disable signal receives at clock input the corresponding complementary signal among the clock signals (CK, CKQ,CKN, CKQN) phase shifted to each other.

6. The local terminal according to any preceding claim, **characterized in that** further a stretcher circuit (7) is provided, which circuit receives at its input the received signal (DTP) and at its clock input the sampling clock signal (CKSEL) and outputs a stretched period signal (DTPC).

7. The local terminal according to any one of the preceding claims, in which said means able to derive from said local clock signal a plurality of clock signals with determined phase differences to each other comprise first circuit means (100; 305) able to introduce a first delay (TA), or multiples thereof, in a clock signal; second circuit means (200; 307) able to introduce a second delay (TB), or multiples thereof, said first delay (TA) being substantially higher than the second delay (TB); combining and selecting means (CL1, 103, CL2, 202; 306, 308, 309, CMP) to check said first circuit means (100; 305) and second circuit means (200; 307) to delay said reference clock signal (CK) by predetermined delays obtained through combination of the first delay time (TA) and second delay time (TB).

8. The local terminal according to claim 7, **characterized in that** said first circuit means (100) comprise a first delay means (101) having the local clock signal (CK) at its input, a second delay element (102) which is able to output m signals (CKM_1...CKM_M) incrementally delayed to each other by the first delay (TA), a multiplexer means (103) able to select one signal among the m signals (CKM_1...CKM_M) upon receipt of a proper instruction from the first logic means (CL1) and **in that** the second circuit means (200), comprising a second delay element (201) able to output m' signals (CKM'_1...CKM'_M) incrementally delayed to each other by the second delay (TB), a multiplexer means (202) able to select one signal of the m' signals (CKM'_1...CKM'_M) upon receipt of a proper instruction from the second logic means (CL2).

9. The local terminal according to claim 7, **characterized in that** the first circuit means (305) consist of a delay element able output n signals incrementally delayed to each other by the first delay (TA), the first logic circuits (306, 309, CMP) comprise a multiplexer (306) controlled by a first counting signal (CNT1) produced by a counter circuit (309), which in its turn is controlled by a comparator circuit (CMP), the second means (307) consist of a delay element able to output m signals incrementally delayed to each other, the second logic circuits (308, 309, CMP) comprise a multiplexer (308) controlled by the counter circuit (309), controlled in its turn by the comparator circuit (CMP).

10. The local terminal according to claim 7, **characterized in that** the first circuit means (305), the second circuit means (307), and the multiplexers (306, 308) are repeated k times, particularly four, at k stages (301, 302, 303, 304), said k stages being connected in cascade, so that specifically the first stage (301) input receives the reference clock signal (CK) and outputs a first delayed clock signal (CKQ), the second stage (302) input receives the first delayed clock signal (CKQ) and outputs a second delayed clock signal (CKN), the third stage (303) input receives the second delayed clock signal (CKN) and outputs a third delayed clock signal (CKQN), the fourth stage (304) input receives the third clock signal (CKQN) and outputs a fourth clock signal (CKR).

11. The local terminal according to claim 7, **characterized in that** the reference clock signal (CK) and the k-th clock signal (CKR) are supplied to the comparator circuit (CMP).

12. The local terminal according to claim 8, **characterized in that** the first logic means (CL1) input receive the most delayed signal (CKM_M) of m signals (CKM_1 ... CKM_M), so as to get an estimated value (TA) of the delays introduced by second delaying element (102).

13. Method for recognizing and tracking the sampling phase of a received signal in a local terminal from a remote terminal, in digital synchronous transmission systems, said local terminal being associated with a local clock signal also used to synchronize the remote terminal, comprising:

   a) obtaining from the local clock signal (CK) a plurality of isofrequential clock signals (CK,CKQ,CKN,CKQN) and having determined phase differences;
   b) measuring the phase of the signal received (DTP) with respect to said plurality of clock signals (CK, CKQ, CKN, CKQN), said measuring the phase comprising comparing the phase of the received signal (DTP) to each of said plurality of isofrequential clock signals (CK, CKQ, CKN, CKQN);
   c) identifying a selected clock signal (CKSEL) among said plurality of clock signals (CK,CKQ, CKN,CKQN) according to the phase measurement (F) of the received signals (DTPC), so that a phase of said selected clock signal substantially corresponds with the phase of the received signal (DTP);
   d) using the selected clock signal (CKSEL) as sampling signal of the received signal (DTP),

   **Characterized in that** said identifying comprises:

   using the phase measurement (F) as input signal to a logic circuit (2) supplying enable and/or disable signals (CK_S, CK_R), respectively, for the selection of a selected clock signal (CKSEL), and
   timing the enable and/or disable signals related to one signal of said plurality of clock signals (CK, CKQ, CKN, CKQN) through the clock signal itself in such a way as to permit to change the selected clock signal only between clock signals adjacent one to another in terms of phase, in order to avoid generating false edges in the sampling signal.

14. Method according to claim 13, **characterized by** controlling the timing of the signal received (DTP), extending its period till a new edge of the selected clock signal (CKSEL) occurs.

15. Method according to claim 13 or 14, in which said obtaining from the local clock signal a plurality of isofrequential clock signals, comprises using digital circuits for:

   a) delaying the local clock signal (CK) through a first plurality of delay cells (102, 305), which introduce substantially the same first delay time (TA) thus generating a first plurality of delayed clock signals (CK_1...CK_M);
   b) selecting an approximate clock signal (CKQP) among the plurality of delayed clock signals (CK_1...CK_M);
   c) delaying the approximate clock signal (CKQP) through a second plurality of delay cells (201, 307), which introduce substantially the same second delay time (TB) considerably lower than the first delay (TA) thus generating a second plurality of delayed clock signals (CK_1'...CK_M'); and
   d) choosing a selected clock signal (CKQ) from the second plurality of delayed clock signals (CK_1'...CK_M') according to a delay combination (TA, TB) introduced in said selected clock signal (CKQ) under steps a) and c).

16. Method according to claim 15, **characterized by** selecting the approximate clock signal (CKQP) in advance with respect to the delayed clock signal (CKQ) to be obtained.

17. Method according to claim 16, **characterized by** picking up the most delayed clock signal (CKM_M) among those belonging to the first plurality of delayed signals (CKM_1...CKM_M) and using it as a reference signal to generate a third plurality of clock signals (CKMS_1...CKMS_M) spaced twice the first delay time (TA) and using them to identify the descending edge of the reference clock signal (CK) through a sampling procedure driven by said reference clock signal (CK).

18. Method according to claim 17, **characterized in that** the result of said sampling procedure drives the selection through a logic circuit (109) of the approximate clock signal (CKQP), and **in that** said approximate clock signal (CKQP) is selected in advance with respect to the signal to be approximated (CKQ).

19. Method according to claim 18, **characterized in that** the logic circuit (109) selects a second approximate clock signal (CKQD), substantially time delayed with respect to the signal to be approximated (CKQ), and in time advance with respect to the reference clock signal (CK), and that said approximate clock signal (CKQD) is used as a reference for the selection of the second plurality of delayed clock signals (CKM_1'... CKM_M').

20. Method according to claim 15, **characterized in that** steps a), b), c) and d) are repeated k times at k stages (301, 302, 303, 304), particularly four, said k stages being connected in cascade, and that a comparing step is performed between the final signal at the cascade end and the reference clock signal so as to check steps b) and d).

## Patentansprüche

1. Lokaler Anschluss eines digitalen synchronen Übertragungssystems, wobei der lokale Anschluss angepasst ist, ein Signal von einem entfernten Anschluss des digitalen synchronen Übertragungssystems zu empfangen, wobei der lokale Anschluss mit einem lokalen Taktsignal (CK) assoziiert ist, das ebenso benutzt wird, um den entfernten Anschluss zu synchronisieren, wobei der lokale Anschluss ein System zur Erkennung und zur Nachführung der Abtastphase (DPA) des Signals aufweist, das von dem entfernten Anschluss empfangen wird, wobei das System zur Erkennung und Nachführung der Abtastphase (DPA) eine Einrichtung (QUAD; QUA-D1) aufweist, die in der Lage ist, von dem lokalen Taktsignal (CK) eine Mehrzahl von isofrequenten Taktsignalen (CK, CKQ, CKN, CKQN) mit bestimmten Phasendifferenzen zueinander abzuleiten, eine Einrichtung (1, 2, 3, 5, 6), die in der Lage ist, unter der Mehrzahl von Taktsignalen mit bestimmten Phasendifferenzen zueinander (CK, CKQ, CKN, CKQN) ein Abtasttaktsignal (CKSEL) des empfangenen Signals (DTP) auszuwählen, wobei das Abtasttaktsignal eine Phase aufweist, die im Wesentlichen mit der Phase des empfangenen Signals (DTP) übereinstimmt, wobei die Einrichtung (1, 2, 3, 5, 6), die in der Lage ist, ein Abtasttaktsignal (CKSEL) des empfangenen Signals (DTP) auszuwählen, eine Einrichtung (1) zur Detektion der Phase des empfangenen Signals (DTP) mit Bezug auf die Taktsignale (CK, CKQ, CKN, CKQN) aufweist, wobei die Einrichtung (1) zur Detektion der Phase derart eingerichtet ist, die Phase des empfangenen Signals (DTP) mit jedem der Mehrzahl von isofrequenten Taktsignalen (CK, CKQ, CKN, CKQN) zu vergleichen, weiterhin umfassend eine logische Einrichtung (2, 3, 4, 5), um Auswahlsignale (SSEL) basierend auf dem Ergebnis der Phasendetektionseinrichtung (1) zu generieren, eine Multiplexerschaltung (6), die in der Lage ist, das Abtasttaktsignal (CKSEL) als eine Funktion eines Auswahlzustands auszuwählen, definiert durch die Auswahlsignale (SSEL), **dadurch gekennzeichnet, dass** die logische Einrichtung einen Speicherschaltungsblock (5) aufweist zur Speicherung der Auswahlsignale, und um der Multiplexerschaltung zu ermöglichen, das selektierte Abtasttaktsignal nur zwischen den Taktsignalen (CK, CKQ, CKN, CKQN) zu wechseln, die in Bezug auf die Phase zueinander benachbart sind.

2. Lokaler Anschluss nach Anspruch 1, **dadurch gekennzeichnet, dass** die Einrichtung (QUAD; OUAD1) zur Ableitung einer Mehrzahl von Taktsignalen (CK, CKQ, CKN, CKQN) mit bestimmten Phasendifferenzen zueinander von dem lokalen Taktsignal (CK) verschiedene Taktsignale erzeugt, welche zueinander phasenverschoben sind, insbesondere zueinander Quadraturphasenverschoben sind.

3. Lokaler Anschluss nach Anspruch 1 oder 2, **dadurch gekennzeichnet, dass** die Phasendetektionseinrichtung (1) an die logische Einrichtung (2, 3) eine binäre Information (a, b, c, d) über den Phasenwert des empfangenen Signals (DTP) sendet.

4. Lokaler Anschluss nach Anspruch 3, **dadurch gekennzeichnet, dass** die logische Einrichtung (2, 3) aus einer Auswahllogik (2) zusammengesetzt ist, die Auswahlsignale (SAB) an eine Phasen-neu-zeitsteuernde Schaltung (3) bereitstellt, deren Ausgangssignale den zwischenliegenden Speicherschaltungsblock (5) ansteuern, der die Auswahlsignale (SSEL) bereitstellt.

5. Lokaler Anschluss nach Anspruch 3 oder 4, **dadurch gekennzeichnet, dass** die Phasen-neu-zeitsteuernde Schaltung (3) an ihrem Ausgang eine Mehrzahl, insbesondere acht, Flip-Ffops (41) aufweist, welche an dem Takteingang die Taktsignale (CK, CKQ, CKN, CKQN) empfangen, welche zueinander phasenverschoben sind und Aktivierungs- oder Deaktivierungssignale bereitstellen, wobei der Speicherschaltungsblock (5) durch eine Mehrzahl von Flip-Flops (51), insbesondere vier Set-Reset-Flip-Flops, gebildet ist, welche an ihrem Set-Eingang ein Aktivierungssignal und an ihrem Reset-Eingang ein Deaktivierungssignal empfangen, und dass das Flip-Flop (41), welches das Aktivierungssignal für ein Taktsignal unter der Mehrzahl von Taktsignalen (CK, CKQ, CKN, CKQN), die zueinander phasenverschoben sind, bereitstellt, an dem Takteingang das entsprechende Signal unter den Taktsignalen (CK, CKQ, CKN, CKQN), die zueinander phasenverschoben sind, empfängt, wohingegen das Flip-Flop (41), welches das Deaktivierungssignal bereitstellt, an dem Takteingang das entsprechende komplementäre Signal unter den Taktsignalen (CK, CKQ, CKN, CKON), die zueinander phasenverschoben sind, empfängt.

6. Lokaler Anschluss nach einem der vorhergehenden Ansprüche, **dadurch gekennzeichnet, dass** weiterhin eine Streckschaltung (7) bereitgestellt wird, welche Schaltung an ihrem Eingang das empfangene Signal (DTP) und an ihrem Takteingang das Abtasttaktsignal (CKSEL) empfängt, und ein Signal mit einer gestreckten Periode (DTPC) ausgibt.

7. Lokaler Anschluss nach einem der vorhergehenden Ansprüche, in welchem die Einrichtung, die in der Lage ist, von dem lokalen Taktsignal eine Mehrzahl von Taktsignalen mit bestimmten Phasendifferenzen zueinander abzuleiten, eine erste Schaltungseinrichtung (100; 305), die in der Lage ist, eine erste Verzögerung (TA) oder Vielfache davon in ein Taktsignal einzuführen; eine zweite Schaltungseinrichtung (200; 307), die in der Lage ist, eine zweite Verzögerung (TB) oder Vielfache davon, einzuführen, wobei die erste Verzögerung (TA) wesentlich höher ist als die zweite Verzögerung (TB); eine Kombinations- und Auswahleinrichtung (CL1, 103, CL2, 202; 306, 308, 309, CMP) zur Überprüfung der ersten Schaltungseinrichtung (100; 305) und zweiten Schaltungseinrichtung (200; 307) zur Verzögerung des Referenztaktsignals (CK) durch vorbestimmte Verzögerungen, die durch Kombination der ersten Verzögerungszeit (TA) und zweiten Verzögerungszeit (TB) erhalten werden, aufweist.

8. Lokaler Anschluss nach Anspruch 7, **dadurch gekennzeichnet, dass** die erste Schaltungseinrichtung (100) eine erste Verzögerungseinrichtung (101) mit dem lokalen Taktsignal (CK) an seinem Eingang, ein zweites Verzögerungselement (102), welches in der Lage ist, m Signale (CKM_1 ... CKM_M) auszugeben, die inkrementell zueinander durch die erste Verzögerung (TA) verzögert sind, eine Multiplexereinrichtung (103), die in der Lage ist, ein Signal unter den m Signalen (CKM_ ...CKM_M) auf das Empfangen einer geeigneten Instruktion von der ersten logischen Einrichtung (CL1) auszuwählen, aufweist, und dass die zweite Schaltungseinrichtung (200) ein zweites Verzögerungselement (201), das in der Lage ist, m Signale (CKM'_1 ...CKM'_M), die in inkrementell zueinander durch die zweite Verzögerung (TB) verzögert sind, auszugeben, eine Multiplexereinrichtung (202), die in der Lage ist, ein Signal der m' Signale (CKM'_1...CKM_M) auf das Empfangen einer geeigneten Instruktion von der zweiten logischen Einrichtung (CL2) auszuwählen, aufweist.

9. Lokaler Anschluss nach Anspruch 7, **dadurch gekennzeichnet, dass** die erste Schaltungseinrichtung (305) aus einem Verzögerungselement zusammengesetzt ist, das in der Lage ist, n Signale, die inkrementell zueinander durch die erste Verzögerung (TA) verzögert sind, auszugeben, die ersten logischen Schaltungen (306, 309, CMP) einen Multiplexer (306) aufweisen, der durch ein erstes Zählsignal (CNT1) gesteuert wird, das durch eine Zählschaltung (309) erzeugt wird, welche wiederum durch eine Vergleichsschaltung (CMP) gesteuert ist, wobei die zweite Einrichtung (307) aus einem Verzögerungselement zusammengesetzt ist, das in der Lage ist, m Signale auszugeben, die inkrementell zueinander verzögert sind, wobei die zweiten logischen Schaltungen (308, 309, CMP) einen Multiplexer (308) aufweisen, der durch die Zählschaltung (309) gesteuert ist, die wiederum durch die Vergleichsschaltung (CMP) gesteuert ist.

10. Lokaler Anschluss nach Anspruch 7, **dadurch gekennzeichnet, dass** die erste Schaltungseinrichtung (305), die zweite Schaltungseinrichtung (307) und die Multiplexer (306, 308) k-mal wiederholt werden, insbesondere vier, an k-Stufen (301, 302, 303, 304), wobei die k-Stufen kaskadenförmig verbunden sind, sodass insbesondere der Eingang der ersten Stufe (301) das Referenztaktsignal (CK) empfängt und ein erstes verzögertes Taktsignal (CKQ) ausgibt, der Eingang der zweiten Stufe (302) das erste verzögerte Taktsignal (CKQ) empfängt und ein zweites verzögertes Taktsignal (CKN) ausgibt, der Eingang der dritten Stufe (303) das zweite verzögerte Taktsignal (CKN) empfängt und ein drittes verzögertes Taktsignal (CKQN) ausgibt, der Eingang der vierten Stufe (304) das dritte Taktsignal (CKQN) empfängt und ein viertes Taktsignal (CKR) ausgibt.

11. Lokaler Anschluss nach Anspruch 7, **dadurch gekennzeichnet, dass** das Referenztaktsignal (CK) und das k-te Taktsignal (CKR) an die Vergleichsschaltung (CMP) bereitgestellt werden.

**EP 0 929 168 B1**

**12.** Lokaler Anschluss nach Anspruch 8, **dadurch gekennzeichnet, dass** der Eingang der ersten logischen Einrichtung (CL1) das am meisten verzögerte Signal (CKM_M) von m Signalen (CKM_1...CKM_M) empfängt, sodass ein geschätzter Wert (TA) der Verzögerungen erhalten wird, die durch das zweite verzögernde Element (102) eingeführt werden.

**13.** Verfahren zur Erkennung und Nachführung der Abtastphase eines empfangenen Signals in einem lokalen Anschluss von einem entfernten Anschluss in digitalen synchronen Übertragungssystemen, wobei der lokale Anschluss mit einem lokalen Taktsignal assoziiert ist, das ebenso zur Synchronisation des entfernten Anschlusses verwendet wird, umfassend:

a) Erhalten von dem lokalen Taktsignal (CK) einer Mehrzahl von isofrequenten Taktsignalen (CK, CKQ, CKN, CKQN) mit bestimmten Phasendifferenzen;
b) Erfassen der Phase des empfangenen Signals (DTP) mit Bezug auf die Mehrzahl von Taktsignalen (CK, CKQ, CKN, CKQN), wobei das Erfassen der Phase aufweist das Vergleichen der Phase des empfangenen Signals (DTP) mit jedem der Mehrzahl von isofrequenten Taktsignalen (CK, CKQ, CKN, CKQN);
c) Identifizieren eines ausgewählten Taktsignals (CKSEL) unter der Mehrzahl von Taktsignalen (CK, CKQ, CKN, CKQN) entsprechend der Phasenerfassung (F) des empfangenen Signals (DTP), sodass eine Phase des ausgewählten Taktsignals im Wesentlichen mit der Phase des empfangenen Signals (DTP) korrespondiert,
d) Verwenden des ausgewählten Taktsignals (CKSEL) als Abtastsignal des empfangenen Signals (DTP),

**dadurch gekennzeichnet, dass** das Identifizieren umfasst:

Verwenden der Phasenerfassung (F) als Eingangssignal an eine logische Schaltung (2), die Aktivierungs- und/ oder Deaktivierungssignale (CK_S, CK_R) jeweils bereitstellt für die Auswahl eines ausgewählten Taktsignals (CKSEL), und
zeitliche Bestimmung der Aktivierungs- und/oder Deaktivierungssignale bezogen auf ein Signal der Mehrzahl von Taktsignalen (CK, CKQ, CKN, CKQN) durch das Taktsignal selbst in der Art und Weise, um zu ermöglichen, dass das ausgewählte Taktsignal nur zwischen Taktsignalen gewechselt wird, die in Bezug auf die Phase benachbart zueinander sind, um das Generieren von falschen Flanken in dem Abtastsignal zu verhindern.

**14.** Verfahren nach Anspruch 13, **gekennzeichnet durch** Steuerung der zeitlichen Bestimmung des empfangenen Signals (DTP), wobei seine Periode gestreckt wird, bis eine neue Flanke des ausgewählten Taktsignals (CKSEL) auftritt.

**15.** Verfahren nach Anspruch 13 oder 14, in welchem das Erhalten einer Mehrzahl von isofrequenten Taktsignalen von dem lokalen Taktsignal das Verwenden von digitalen Schaltungen umfasst für:

a) Verzögern des lokalen Taktsignals (CK) durch eine erste Mehrzahl von Verzögerungszellen (102, 305), welche im Wesentlichen die gleiche erste Verzögerungszeit (TA) einführen, sodass eine erste Mehrzahl von verzögerten Taktsignalen (CK_1...CK_M) erzeugt wird;
b) Auswählen eines annähernden Taktsignals (CKQP) unter der Mehrzahl von verzögerten Taktsignalen (CK_1...CK_M);
c) Verzögern des annähernden Taktsignals (CKQP) durch eine zweite Mehrzahl von Verzögerungszellen (201, 307), welche im Wesentlichen die gleiche zweite Verzögerungszeit (TB) einführen, die merklich geringer ist als die erste Verzögerung (TA), sodass eine zweite Mehrzahl von verzögerten Taktsignalen (CK_1'...CK_M') generiert wird; und
d) Auswählen eines ausgewählten Taktsignals (CKQ) von der zweiten Mehrzahl von verzögerten Taktsignalen (CK_1'...CK_M') gemäß einer Verzögerungskombination (TA, TB), die in das ausgewählte Taktsignal (CKQ) unter Schritten a) und c) eingeführt wurde.

**16.** Verfahren nach Anspruch 15, **gekennzeichnet durch** vorheriges Auswählen des annähernden Taktsignals (CKQP), mit Bezug auf das zu erhaltende verzögerte Taktsignal (CKQ)

**17.** Verfahren nach Anspruch 16, **gekennzeichnet durch** Aufnehmen des am meisten verzögerten Taktsignals (CKM_M) unter jenen, die zu der ersten Mehrzahl von verzögerten Signalen (CKM_1...CKM_M) gehören, und Verwenden desselben als ein Referenzsignal, um eine dritte Mehrzahl von Taktsignalen (CKMS_1...CKMS_M) zu generieren, die um das Zweifache der ersten Verzögerungszeit (TA) beabstandet sind, und Verwendung dieser, um die abfallende Flanke des Referenztaktsignals (CK) **durch** eine Abtastprozedur zu identifizieren, die **durch** das Referenz-

14

taktsignal (CK) gesteuert ist.

18. Verfahren nach Anspruch 17, **dadurch gekennzeichnet, dass** das Ergebnis der Abtastprozedur die Auswahl durch eine logische Schaltung (109) des annähernden Taktsignals (CKQP) steuert, und dass das annähernde Taktsignal (CKQP) zuvor mit Bezug auf das anzunähernde Signal (CKQ) ausgewählt wird.

19. Verfahren nach Anspruch 18, **dadurch gekennzeichnet, dass** die logische Schaltung (109) ein zweites annäherndes Taktsignal (CKQD) auswählt, das wesentlich zeitverzögert mit Bezug auf das anzunähernde Signal (CKQ) und in Zeitvorlauf mit Bezug auf das Referenztaktsignal (CK) ist, und dass das annähernde Taktsignal (CKQD) als eine Referenz für die Auswahl der zweiten Mehrzahl von verzögerten Taktsignalen (CKM_1'...CKM_M') verwendet wird.

20. Verfahren nach Anspruch 15, **dadurch gekennzeichnet, dass** Schritte a), b), c) und d) k-mal an k-Stufen (301, 302, 303, 304), insbesondere 4, wiederholt werden, wobei die k-Stufen kaskadenförmig verbunden sind, und dass ein Vergleichsschritt zwischen dem finalen Signal an dem Kaskaden-Ende und dem Referenztaktsignal durchgeführt wird, um die Schritte b) und d) zu überprüfen.

## Revendications

1. Terminal local d'un système de transmission numérique synchrone, le terminal local étant adapté à recevoir un signal d'un terminal distant du système de transmission numérique synchrone, le terminal local étant associé à un signal d'horloge local (CK) également utilisé pour synchroniser le terminal distant, le terminal local comprenant un système de reconnaissance et de suivi de la phase d'échantillonnage (DPA) du signal reçu à partir du terminal distant, le système de reconnaissance et de suivi de la phase d'échantillonnage (DPA) comprenant des moyens (QUAD ; QUAD1) aptes à fournir à partir du signal d'horloge local (CK) une pluralité de signaux d'horloge de même fréquence (CK, CKQ, CKN, CKQN) ayant des différences de phase déterminées les uns par rapport aux autres, et des moyens (1, 2, 3, 5, 6) aptes à sélectionner, parmi la pluralité de signaux d'horloge ayant des différences de phase prédéterminées les uns par rapport aux autres (CK, CKQ, CKN, CKQN), un signal d'horloge d'échantillonnage (CKSEL) du signal reçu (DTP), le signal d'horloge d'échantillonnage ayant une phase qui coïncide sensiblement avec la phase du signal reçu (DTP) ;
les moyens (1, 2, 3, 5, 6) aptes à sélectionner un signal d'horloge d'échantillonnage (CKSEL) du signal reçu (DTP) comprenant des moyens (1) pour détecter la phase du signal reçu (DTP) par rapport aux signaux d'horloge (CK, CKQ, CKN, CKQN), lesdits moyens (1) de détection de phase étant agencés pour comparer la phase du signal reçu (DTP) à chacun de la pluralité de signaux d'horloge de même fréquence (CK, CKQ, CKN, CKQN), des moyens logiques (2, 3, 4, 5) pour produire des signaux de sélection (SSEL) sur la base du résultat des moyens de détection de phase (1), et un circuit multiplexeur (6) apte à sélectionner le signal d'horloge d'échantillonnage (CKSEL) en fonction d'un état de sélection défini par les signaux de sélection (SSEL) ;
**caractérisé en ce que** les moyens logiques comprennent un bloc de circuit de mémoire (5) pour mémoriser les signaux de sélection et pour permettre aux circuits de multiplexeur de modifier le signal d'horloge d'échantillonnage choisi seulement entre les signaux d'horloge (CK, CKQ, CKN, CKQN) voisins les uns des autres en terme de phase.

2. Terminal local selon la revendication 1, **caractérisé en ce que** lesdits moyens (QUAD ; QUAD1) aptes à fournir à partir du signal d'horloge local (CK) une pluralité de signaux d'horloge (CK, CKQ, CKN, CKQN) produisent des signaux d'horloge différents qui sont déphasés les uns par rapport aux autres, en particulier déphasés en quadrature les uns par rapport aux autres.

3. Terminal local selon la revendication 1 ou 2, **caractérisé en ce que** les moyens de détection de phase (1) émettent vers les moyens logiques (2, 3) une information binaire (a, b, c, d) sur la valeur de phase du signal reçu (DTP).

4. Terminal local selon la revendication 3, **caractérisé en ce que** les moyens logiques (2, 3) comprennent des moyens logiques de sélection (2) fournissant des signaux de sélection (SAB) à un circuit de remise en phase (3) dont les signaux de sortie pilotent le bloc de circuit de mémoire intermédiaire (5) fournissant les signaux de sélection (SSEL).

5. Terminal local selon la revendication 3 ou 4, **caractérisé en ce que** le circuit de remise en phase (3) a à sa sortie une pluralité, par exemple huit, de bascules (41) qui reçoivent sur l'entrée d'horloge les signaux d'horloge (CK, CKQ, CKN, CKQN) qui sont déphasés les uns par rapport aux autres et fournissent des signaux de validation ou d'invalidation, le bloc de circuit de mémoire (5) étant constitué d'une pluralité de bascules (51), par exemple quatre bascules de mise à 1 et remise à 0, qui, sur leur entrée de mise à 1 reçoivent un signal de validation et sur leur entrée de remise à 0 reçoivent un signal d'invalidation, et **en ce que** la bascule (41) fournissant le signal de validation pour un premier signal d'horloge parmi la pluralité de signaux d'horloge (CK, CKQ, CKN, CKQN) déphasés les uns par rapport aux autres reçoit sur son entrée d'horloge le signal correspondant parmi les signaux d'horloge (CK, CKQ, CKN, CKQN) déphasés les uns par rapport aux autres, tandis que la bascule (41) fournissant le signal d'invalidation reçoit sur son entrée d'horloge le signal complémentaire correspondant parmi les signaux d'horloge (CK, CKQ, CKN, CKQN) déphasés les uns par rapport aux autres.

6. Terminal local selon l'une quelconque des revendications précédentes, **caractérisé en ce qu'**il comprend en outre un circuit d'extension (7), ce circuit recevant sur son entrée le signal reçu (DTP) et sur son entrée d'horloge le signal d'horloge d'échantillonnage (CKSEL) et fournissant un signal de période allongée (DTPC).

7. Terminal local selon l'une quelconque des revendications précédentes, dans lequel lesdits moyens aptes à fournir à partir du signal d'horloge local une pluralité de signaux d'horloge ayant des différences de phase prédéterminées les uns par rapport aux autres comprennent des premiers moyens de circuit (100, 305) aptes à introduire un premier retard (TA), ou des multiples de celui-ci, dans un signal d'horloge ; des seconds moyens de circuit (200, 307) aptes à introduire un second retard (TB), ou des multiples de celui-ci, le premier retard (TA) étant sensiblement supérieur au second retard (TB) ; un moyen de combinaison et de sélection (CL1, 103, CL2, 202 ; 306, 308, 309, CMP) pour vérifier les premiers moyens de circuit (100, 305) et les seconds moyens de circuit (200, 307) pour retarder le signal d'horloge de référence (CK) de retard prédéterminé obtenu par combinaison de la première durée de retard (TA) et de la seconde durée de retard (TB).

8. Terminal local selon la revendication 7, **caractérisé en ce que** les premiers moyens de circuit (100) comprennent un premier moyen de retard (101) recevant le signal d'horloge local (CK), un second élément de retard (102) apte à fournir m signaux (CKM_1...CKM_M) retardés incrémentiellement les uns par rapport aux autres du premier retard (TA), un moyen multiplexeur (103) apte à sélectionner un signal parmi les m signaux (CKM_1...CKM_M) à réception d'une instruction convenable du premier moyen logique (CL1) et **en ce que** les seconds moyens de circuit (200) comprennent un second élément de retard (201) apte à fournir m' signaux (CKM'_1...CKM'_M) incrémentiellement retardés les uns par rapport aux autres du second retard (TB), un moyen multiplexeur (202) apte à sélectionner un signal parmi les m' signaux (CKM'_1 ... CKM'_M) à réception d'une instruction convenable du second moyen logique (CL2).

9. Terminal local selon la revendication 7, **caractérisé en ce que** les premiers moyens de circuit (305) consistent en un élément de retard apte à fournir m signaux incrémentiellement retardés les uns par rapport aux autres du premier retard (TA), les premiers circuits logiques (306, 309, CMP) comprennent un multiplexeur (306) commandé par un premier signal de comptage (CNT1) produit par un circuit de compteur (309) qui est lui-même commandé par un circuit comparateur (CMP), les seconds moyens (307) comprennent un élément de retard apte à fournir m signaux incrémentiellement retardés les uns par rapport aux autres, et les seconds circuits logiques (308, 309, CMP) comprennent un multiplexeur (308) commandé par le circuit de compteur (309) lui-même commandé par le circuit comparateur (CMP).

10. Terminal local selon la revendication 7, **caractérisé en ce que** les premiers moyens de circuit (305), les seconds moyens de circuit (307) et les multiplexeurs (306, 308) sont répétés k fois, par exemple quatre, au niveau de k étages (301, 302, 303, 304), les k étages étant connectés en cascade, de sorte qu'en particulier le premier étage (301) reçoit le signal d'horloge de référence (CK) et fournit un premier signal d'horloge retardé (CKQ), le second étage (302) reçoit le premier signal d'horloge retardé (CKQ) et fournit un second signal d'horloge retardé (CKN), le troisième étage (303) reçoit le second signal d'horloge retardé (CKN) et fournit un troisième signal d'horloge retardé (CKQN), le quatrième étage (304) reçoit le troisième signal d'horloge (CKQN) et fournit un quatrième signal d'horloge (CKR).

11. Terminal local selon la revendication 7, **caractérisé en ce que** le signal d'horloge de référence (CK) et le K$^{ième}$ signal d'horloge (CKR) sont fournis au circuit comparateur (CMP).

12. Terminal local selon la revendication 8, **caractérisé en ce que** le premier moyen logique (CL1) reçoit le signal le plus retardé (CKM_M) parmi les m signaux (CKM_1...CKM_M), de façon à obtenir une valeur estimée (TA) des retards introduits par le second élément de retard (102).

13. Procédé de reconnaissance et de suivi de la phase d'échantillonnage d'un signal reçu dans un terminal local à partir d'un terminal distant, dans des systèmes de transmission numérique synchrone, le terminal local étant associé à un signal d'horloge local également utilisé pour synchroniser le terminal distant, comprenant :

a) obtenir à partir du signal d'horloge local (CK) une pluralité de signaux d'horloge de même fréquence (CK, CKQ, CKN, CKQN) ayant des différences de phase déterminées ;

b) mesurer la phase du signal reçu (DTP) par rapport à la pluralité de signaux d'horloge (CK, CKQ, CKN, CKQN), la mesure de phase comprenant une comparaison de la phase du signal reçu (DTP) à chacun de la pluralité de signaux d'horloge de même fréquence (CK, CKQ, CKN, CKQN) ;

c) identifier un signal d'horloge sélectionné (CKSEL) parmi la pluralité de signaux d'horloge (CK, CKQ, CKN, CKQN) en fonction de la mesure de phase (F) du signal reçu (DTP) de sorte que la phase du signal d'horloge sélectionné correspond sensiblement à la phase du signal d'horloge reçu (DTP) ;

d) utiliser le signal d'horloge sélectionné (CKSEL) comme signal d'échantillonnage du signal reçu (DTP) ;

**caractérisé en ce que** ladite identification comprend :

utiliser la mesure de phase (F) en tant que signal d'entrée pour un circuit logique (2) fournissant des signaux de validation et/ou d'invalidation (CK_S, CK_R) respectivement pour la sélection d'un signal d'horloge sélectionné (CKSEL), et

synchroniser des signaux de validation et/ou d'invalidation associés à un signal de la pluralité de signaux d'horloge (CK, CKQ, CKN, CKQN) par l'intermédiaire du signal d'horloge lui-même de façon à permettre de modifier le signal d'horloge sélectionné seulement entre des signaux d'horloge adjacents les uns aux autres en terme de phase, pour éviter de produire des fronts erronés du signal d'échantillonnage.

14. Procédé selon la revendication 13, **caractérisé par** la commande de la synchronisation du signal reçu (DTP) en étendant sa période sur la survenance d'un nouveau front du signal d'horloge sélectionné (CKSEL).

15. Procédé selon la revendication 13 ou 14, dans lequel l'obtention à partir du signal d'horloge local d'une pluralité de signaux d'horloge de même fréquence comprend l'utilisation de circuits numériques pour :

a) retarder le signal d'horloge local (CK) par l'intermédiaire d'une pluralité de cellules de retard (102, 305) qui introduisent sensiblement le même premier retard (TA), produisant ainsi une première pluralité de signaux d'horloge retardés (CK_1...CK_M) ;

b) sélectionner un signal d'horloge approché (CKQP) parmi la pluralité de signaux d'horloge retardés (CK_1...CK_M) ;

c) retarder le signal d'horloge approché (CKQP) par l'intermédiaire d'une seconde pluralité de cellules de retard (201, 307) qui introduisent sensiblement la même seconde durée de retard (TB) considérablement plus faible que la première durée de retard (TA) produisant ainsi une seconde pluralité de signaux d'horloge retardés (CK_1'...CK_M') ; et

d) choisir un signal d'horloge sélectionné (CKQ) à partir de la seconde pluralité de signaux d'horloge retardés (CK_1'...CK_M') selon une combinaison de retards (TA, TB) introduite dans le signal d'horloge sélectionné (CKQ) selon les étapes a) et c).

16. Procédé selon la revendication 15, **caractérisé par** la sélection du signal d'horloge approché (CKQP) en avance par rapport au signal d'horloge retardé (CKQ) à obtenir.

17. Procédé selon la revendication 16, **caractérisé par** la capture du signal d'horloge le plus retardé (CKM_M) parmi ceux appartenant à la première pluralité de signaux d'horloge retardés (CKM_1 ... CKM_M) et son utilisation comme signal de référence pour produire une troisième pluralité de signaux d'horloge (CKMS_1...CKMS_M) espacés de deux fois la première durée de retard (TA) et les utiliser pour identifier le front descendant du signal d'horloge de référence (CK) par l'intermédiaire d'un processus d'échantillonnage piloté par le signal d'horloge de référence (CK).

18. Procédé selon la revendication 17, **caractérisé en ce que** le résultat du processus d'échantillonnage pilote la sélection par l'intermédiaire d'un circuit logique (109) du signal d'horloge approché (CKQP), et **en ce que** le signal d'horloge approché (CKQP) est sélectionné en avance par rapport au signal dont on veut obtenir l'approximation (CKQ).

19. Procédé selon la revendication 18, **caractérisé en ce que** le circuit logique (109) sélectionne un second signal d'horloge approché (CKQD) sensiblement retardé par rapport au signal à approcher (CKQ) et en avance par rapport au signal d'horloge de référence (CK), et **en ce que** le signal d'horloge approché (CKQD) est utilisé comme référence pour la sélection de la seconde pluralité de signaux d'horloge retardés (CKM_1'...CKM_M').

20. Procédé selon la revendication 15, **caractérisé en ce que** les étapes a), b), c) et d) sont répétées k fois au niveau de k étages (301, 302, 303, 304), par exemple quatre, les k étages étant connectés en cascade, et **en ce qu'**une étape de comparaison est réalisée entre le signal final à la fin de la cascade et le signal d'horloge de référence de façon à vérifier les étapes b) et d).

FIG. 1a

FIG. 1b

FIG.2

FIG. 3a

FIG. 3b

| a | b | c | d | CKSEL | SCK | | SCKQ | | SCKN | | SCKQN | |
|---|---|---|---|-------|-----|-----|------|-----|------|-----|-------|-----|
| | | | | | S | R | S | R | S | R | S | R |
| 0 | 0 | 0 | 0 | ---- | 1 | 1 | 1 | 1 | 1 | 1 | 1 | 1 |
| 0 | 0 | 0 | 1 | ckq | 1 | 0 | 0 | 1 | 1 | 0 | 1 | 0 |
| 0 | 0 | 1 | 0 | ---- | 1 | 1 | 1 | 1 | 1 | 1 | 1 | 1 |
| 0 | 0 | 1 | 1 | ckq | 1 | 0 | 0 | 1 | 1 | 0 | 1 | 0 |
| 0 | 1 | 0 | 0 | ---- | 1 | 1 | 1 | 1 | 1 | 1 | 1 | 1 |
| 0 | 1 | 0 | 1 | ---- | 1 | 1 | 1 | 1 | 1 | 1 | 1 | 1 |
| 0 | 1 | 1 | 0 | ---- | 1 | 1 | 1 | 1 | 1 | 1 | 1 | 1 |
| 0 | 1 | 1 | 1 | ck | 0 | 1 | 1 | 0 | 1 | 0 | 1 | 0 |
| 1 | 0 | 0 | 0 | ckn | 1 | 0 | 1 | 0 | 0 | 1 | 1 | 0 |
| 1 | 0 | 0 | 1 | ckn | 1 | 0 | 1 | 0 | 0 | 1 | 1 | 0 |
| 1 | 0 | 1 | 0 | ---- | 1 | 1 | 1 | 1 | 1 | 1 | 1 | 1 |
| 1 | 0 | 1 | 1 | ckn | 1 | 0 | 1 | 0 | 0 | 1 | 1 | 0 |
| 1 | 1 | 0 | 0 | ckqn | 1 | 0 | 1 | 0 | 1 | 0 | 0 | 1 |
| 1 | 1 | 0 | 1 | ckqn | 1 | 0 | 1 | 0 | 1 | 0 | 0 | 1 |
| 1 | 1 | 1 | 0 | ck | 0 | 1 | 1 | 0 | 1 | 0 | 1 | 0 |
| 1 | 1 | 1 | 1 | ---- | 1 | 1 | 1 | 1 | 1 | 1 | 1 | 1 |

FIG. 4a

FIG. 4b

EP 0 929 168 B1

FIG. 5

EP 0 929 168 B1

FIG. 6